**Europäisches Patentamt**

**European Patent Office**

**Office européen des brevets**

(19)

(11) Veröffentlichungsnummer: **0 097 238**
**B1**

(12) # EUROPÄISCHE PATENTSCHRIFT

(45) Veröffentlichungstag der Patentschrift:
**04.12.85**

(21) Anmeldenummer: **83104462.3**

(22) Anmeldetag: **06.05.83**

(51) Int. Cl.⁴: **F 16 L 37/18**

(54) **Kupplung.**

(30) Priorität: **18.06.82 DE 3222937**

(43) Veröffentlichungstag der Anmeldung:
**04.01.84 Patentblatt 84/1**

(45) Bekanntmachung des Hinweises auf die Patenterteilung:
**04.12.85 Patentblatt 85/49**

(84) Benannte Vertragsstaaten:
**AT BE CH FR GB IT LI LU NL SE**

(56) Entgegenhaltungen:
**DE - B - 1 097 773**
**DE - C - 342 690**
**FR - A - 2 127 128**
**US - A - 3 379 460**

(73) Patentinhaber: **Surculus AG, 36, Städele, Vaduz (LI)**

(72) Erfinder: **Selz, Alois, Karlstrasse 25, D-7800 Freiburg (DE)**

(74) Vertreter: **Schmitt, Hans, Dipl.-Ing. et al, Dreikönigstrasse 13, D-7800 Freiburg (DE)**

## Beschreibung

Die Erfindung betrifft eine Kupplung zum Verbinden der mit einem Bund versehenen Enden zweier Rohrleitungen od. dgl., welche die die beiden einander zugewandten Bunde übergreifende Mittel zum axialen Verspannen der Rohrleitungsenden gegen eine dazwischen befindliche Dichtung aufweist.

Bekannte derartige Kupplungen weisen in der Regel ein sogenanntes Vaterteil und ein Mutterteil auf, die zusammengesteckt und z. B. mittels Hebel über Exzenter, Kniehebel oder gewindeähnliche Schrägen, Bajonette od. dgl. miteinander verbunden werden (US-A-3 379 460). Diese zum Teil bewährten Kupplungen sind jedoch bezüglich der Verbindungssicherheit, der Handhabung, Platzbedarf usw. noch verbesserungswürdig. Außerdem ist die Lagerhaltung durch die größere Anzahl unterschiedlicher Teile aufwendig. Die Bedienung einer bekannten Rohrkupplung erfolgt beispielsweise über Betätigungshebel, die aufgrund der notwendigen Verschlußkräfte entsprechende Hebellängen aufweisen müssen. Dazu ist dann auch ein entsprechender Freiraum für das Betätigen der Kupplung vorzusehen, was sich insbesondere bei kompakten Rohrinstallationen nachteilig auswirkt.

Bei anderen bekannten Kupplungen, die Bajonettverschlüsse od. dgl. aufweisen, sind ebenfalls hohe Betätigungskräfte erforderlich, für die dann meist weit ausladende Werkzeuge zur Erzielung entsprechend großer Drehmomente verwendet werden müssen. Bei Kupplungen mit fest angebrachten Spannhebeln od. dgl. besteht auch die Gefahr, daß diese unbeabsichtigt, z. B. durch Hängenbleiben, betätigt werden, so daß dann insbesondere beim Fördern von gefährlichen Medien ein erhebliches Sicherheitsrisiko besteht. Durch die unterschiedlichen Konstruktionsmerkmale (Vater- und Mutterteil) und auch dadurch, daß die Spannmechanik meistens fest mit einem der Rohranschlußteile, in der Regel mit dem Mutterteil, verbunden ist, ergeben sich weitere Nachteile, da insbesondere auch praktisch für alle Teile der Kupplung, insbesondere aus Korrosionsgründen, hochwertige Werkstoffe verwendet werden müssen. Ein weiterer erheblicher Nachteil ist auch dadurch gegeben, daß die meist aufwendigen Teile aufgrund verschiedener Rohranschlüsse, z. B. Innen- oder Außengewinde, Flansch- oder Schlauchanschlüsse usw., mehrfach in der gleichen Nennweite am Lager gehalten werden müssen, um allen Einbau- und Anschlußkombinationen zu genügen.

Aufgabe der vorliegenden Erfindung ist es, eine Kupplung der eingangs erwähnten Art zu schaffen, die bei einfachem Aufbau betriebssicher sowie schnell kuppel- bzw. entkuppelbar ist. Außerdem soll sie auch bei gedrängten Rohrinstallationen mit nur geringem Freiraum vorteilhaft einsetzbar sein. Schließlich soll die Handhabung, insbesondere beim Anschließen auch von Schlauchleitungen u. dgl. vereinfacht, und auch Rohrenden, die sonst mittels Losflansche, Überwurfmuttern u. dgl. befestigt werden, anschließbar sein. Schließlich soll der Aufwand für eine Lagerhaltung von zur Kupplung gehörenden bzw. damit zusammenarbeitenden Teilen verringert werden.

Zur Lösung dieser Aufgabe wird erfindungsgemäß vorgeschlagen, daß die Kupplung ein Kupplungs-Gehäuse sowie an den Rohrenden zwei gleiche mit Nippeln od. dgl. versehene, zu Bundnippeln zusammengefaßte Bunde aufweist, und daß die Spannvorrichtung im Kupplungs-Gehäuse angeordnet ist.

Es sind somit zwei gleiche Rohranschlußteile vorhanden, durch die in vorteilhafter Weise unter anderem geringere Lagerhaltungskosten anfallen. Außerdem ist dabei vorteilhaft, daß das Kupplungs-Gehäuse nicht mit dem in den Rohrleitungen geförderten Medium in Berührung kommt, so daß man hier vom Material her praktisch nur den Festigkeitsfaktor berücksichtigen muß.

Eine vorteilhafte Weiterbildung der Erfindung, für die selbständiger Schutz beansprucht wird, sieht vor, daß die Kupplung zusätzlich zu den Spannmitteln eine Rastvorrichtung zum ersten Zusammenhalten der Enden der Rohrleitungen od. dgl. aufweist. Mittels dieser Rastvorrichtung kann vor dem eigentlichen dichten Verbinden der beiden Rohrleitungen zunächst eine mechanische Verbindung geschaffen werden, durch die die Rohrleitungsenden schon zusammengehalten werden. Anschließend kann die Spannvorrichtung zum dichten Abschließen der beiden Rohrenden betätigt werden, wobei aber ein Halten der Rohrleitungen von Hand nicht mehr notwendig ist. Dieses verrastende Einkuppeln ist insbesondere beim Anschließen von schwereren Schlauchleitungen an fest installierte Rohrleitungsenden vorteilhaft, weil dabei beide Hände zum Zuführen des Schlauchendes frei sind.

Vorzugsweise ist vorgesehen, daß das Kupplungs-Gehäuse etwa rohrartig zur Aufnahme der Enden der Rohre od. dgl. ausgebildet ist und an einem Ende einen nach innen weisenden Anschlagbund für den einen Bundnippel od. dgl. sowie mit Abstand dazu etwa radial ein- und ausrückbare Spannklinken zum Übergreifen des anderen Bundnippels od. dgl. aufweist. Der eine Bundnippel kann dadurch gegen den Anschlagbund des Kupplungs-Gehäuses festgelegt werden, während der andere Bundnippel in Funktionsstellung durch die Spannklinken gehalten und gegen die zwischen den Bundnippeln befindliche Ringdichtung angepreßt wird.

Nach einer Weiterbildung der Erfindung, für die ebenfalls selbständiger Schutz beansprucht wird, ist vorgesehen, daß die Spannklinken gleichzeitig als Schwenk- und Schiebeklinken ausgebildet und jeweils mit einem Dreh- und Vorschubantrieb verbunden sind. Dadurch können die Spannklinken einerseits zum ersten Verrasten der beiden Rohrleitungsenden od. dgl. und darüber hinaus auch zum dichten Anpressen an die Dichtung verwendet werden. Zweckmäßigerweise sind dabei die Spannklinken federbeaufschlagt im Sinne einer Einrückbewegung in den Innenquerschnitt des Kupplungs-Gehäuses. Für die Rastverbindung ist dadurch nur ein Einschieben des einen Rohrleitungsendes in das Kupplungs-Gehäuse notwendig, wobei selbständig eine erste Verrastung erfolgt.

Zweckmäßigerweise sind zur Aufnahme bzw. Lagerung der Spannklinken bzw. der Exzenterbolzen seitlich an dem Kupplungs-Gehäuse angeordnete Flanschtaschen vorgesehen, vorzugsweise zwei diametral am Gehäuse gegenüberliegende Flanschtaschen mit insbesondere jeweils zwei mit Parallelabstand zueinander angeordneten Lagerflanschen. Die beiden Lagerflansche werden dabei von dem Exzenterbolzen durchsetzt, auf dem die Spannklinke, in den Zwischenraum zwischen die Lagerflansche greifend, gelagert ist. Die Spannklinken sind somit einerseits stabil gelagert und andererseits aber auch geschützt im wesentlichen innerhalb des Gehäuseumrisses untergebracht.

Nach einer Weiterbildung der Erfindung weisen die Spannklinken jeweils eine Sicherungsnase auf, die in Spannstellung in eine gehäuseseitige Ausnehmung eingreifen. Eine unbeabsichtigte Ausschwenkbewegung der Spannklinken wird durch diese Verriegelung verhindert.

Die Exzenterbolzen weisen außenseitig, insbesondere an ihrem Kopfende eine Angriffsstelle zum Verdrehen in Spannstellung bzw. in Offenstellung auf. An diesen Angriffsstellen kann beispielsweise ein Schraubenschlüssel bzw. ein Inbusschlüssel angesetzt werden, mittels dem dann die Spannklinken in Offenstellung oder auch in Spannstellung gebracht werden können. Wegen der nur geringen erforderlichen Drehkräfte ist dabei auch nur ein vergleichsweise kleines Verdrehwerkzeug erforderlich.

Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

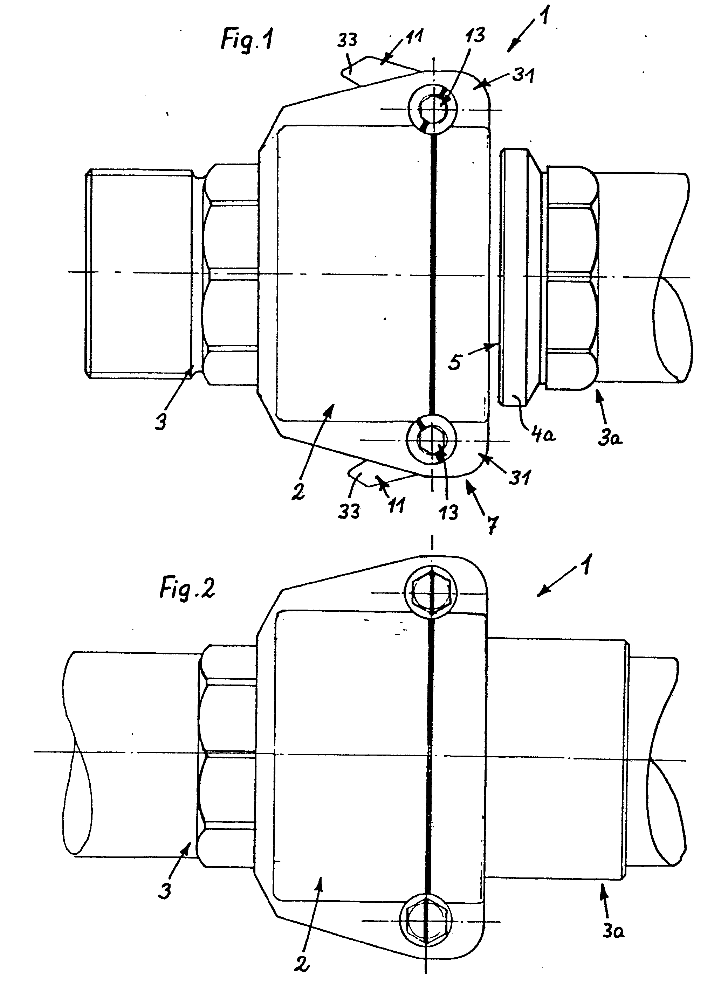

Es zeigt Fig. 1 eine Seitenansicht einer Kupplung in Offenstellung sowie

Fig. 2 in Spannstellung,

Fig. 3 einen Teillängsschnitt der Kupplung im Bereich einer Spannklinke,

Fig. 4 einen Längsschnitt eines Kupplungs-Gehäuses,

Fig. 5 einen Querschnitt im Bereich der Lagerung einer Spannklinke,

Fig. 6 eine Stirnseitenansicht sowie

Fig. 7 und 8 Seiten- bzw. Teilseitenansichten eines Exzenterbolzens und

Fig. 9 eine zum Teil im Schnitt gehaltene Seitenansicht im Bereich einer Flanschtasche mit eingesetzter Spannklinke.

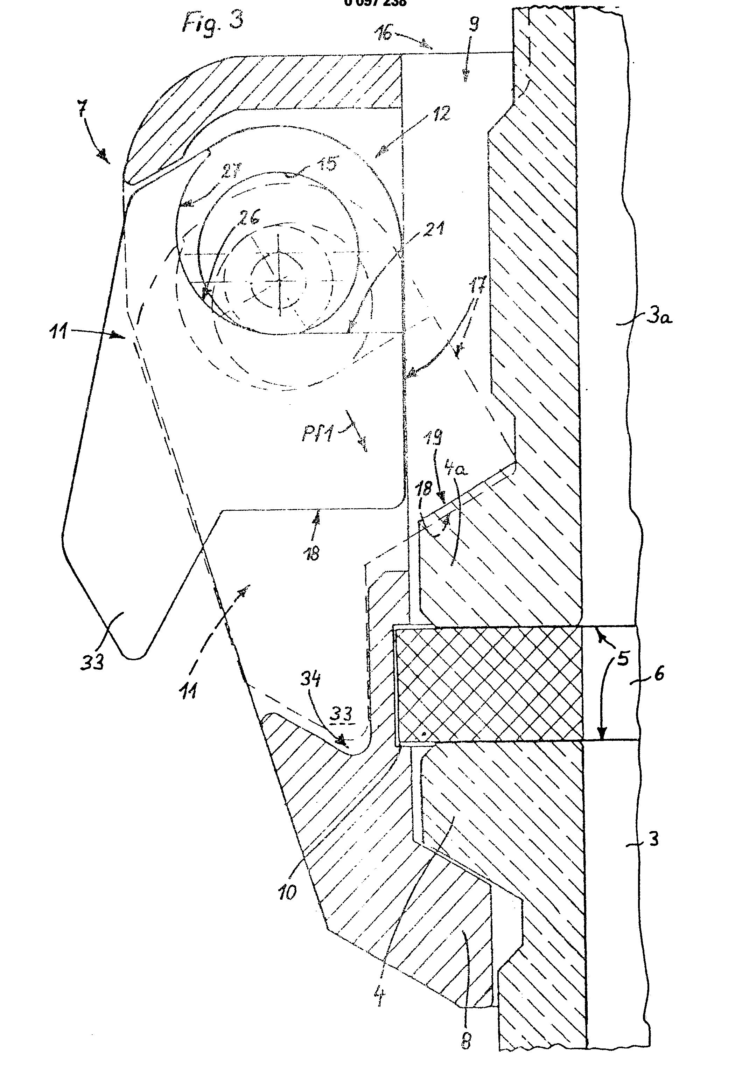

Eine Kupplung 1 (Fig. 1 und 2) weist im wesentlichen ein Kupplungs-Gehäuse 2 sowie zwei gleiche, die zu verbindenden Rohrleitungsenden bildende Bundnippel 3, 3a auf. In Spannstellung (Fig. 2) liegen die Bunde 4, 4a mit ihren Stirnseiten 5 dicht gegen eine Ringdichtung 6 (Fig. 3). Zum Halten der beiden Bundnippel 3, 3a ist beim Kupplungs-Gehäuse 2 eine Spannvorrichtung 7 vorgesehen.

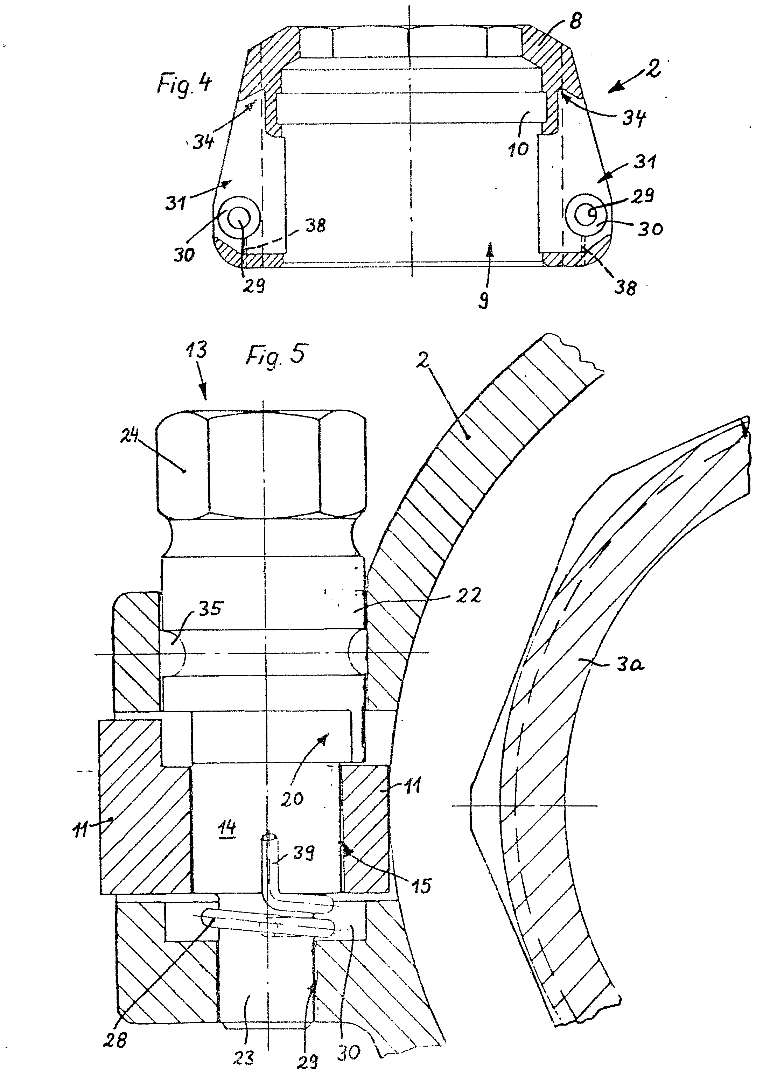

Zur Aufnahme des einen Bundnippels 3 ist an einem Ende des etwa rohrartig ausgebildeten Kupplungs-Gehäuses 2 ein nach innen weisender Anschlagbund 8 (Fig. 4) vorgesehen, der den Bund 4 des einen Bundnippels 3 in Funktionsstellung übergreift. Der Bundnippel 3 wird bei der Montage mit seinem Rohrteil durch die Gehäuse-Öffnung 9 hindurchgesteckt, bis der Bund 4 am Anschlagbund 8 anliegt. An den Anschlagbund 8 schließt sich zum Inneren des Gehäuses 2 hin eine nutförmige Ausformung zur Aufnahme des Bundes des einen Bundnippels 3 an. Benachbart zu dieser Aufnahme ist eine Ringnut 10 zur teilweisen Aufnahme der Ringdichtung 6 vorgesehen (vgl. auch Fig. 3). Bei eingesetzter Ringdichtung 6 ist der Bundnippel 3 axial so festgelegt, daß er nicht mehr aus dem Gehäuse 2 herausrutschen kann. Der andere Bundnippel 3a wird in Spannstellung (Fig. 2 und strichliniert in Fig. 3) durch die Spannvorrichtung 7 gegen die andere Stirnseite der Ringdichtung 6 gepreßt.

Die Spannvorrichtung 7 weist im wesentlichen zwei am Kupplungs-Gehäuse 2 diametral gegenüberliegend angeordnete Spannklinken 11 auf, die in Einrückstellung den Bund 4a des Bundnippels 3a hintergreifen. Die Spannklinken 11 sind etwa radial ein- und ausrückbar sowie auch etwa in Längsrichtung der Kupplung 1 bzw. der Bundnippel 3, 3a verschiebbar gelagert (Pf 1). Dazu sind sie jeweils mit einem Dreh- und Vorschubantrieb 12 verbunden, der hier im wesentlichen durch einen Exzenterantrieb mit einem Exzenterbolzen 13 (Fig. 5) gebildet ist. Dieser Exzenterbolzen durchgreift die Spannklinke 11 in ihrem Drehpunkt, wobei sein Exzenter 14 im wesentlichen sich innerhalb der Aufnahmebohrung 15 der Spannklinke 11 befindet. Weiterhin ist an dem Exzenterbolzen 13 bzw. der Spannklinke 11 ein Mitnehmer vorgesehen, mittels dem die Spannklinke 11 in Offen- bzw. Freigabestellung (Fig. 1 und 3) ausgeschwenkt werden kann. Die Spannklinken 11 lassen sich somit in Offenstellung, in eine Einklinkstellung mit in den Innenquerschnitt des Kupplungs-Gehäuses 2 eingreifenden Spannklinken 11 sowie durch weiteres Verdrehen des Exzenterbolzens 13 in eine Spannstellung bringen. Die Spannklinken 11 sind federbeaufschlagt im Sinne einer Einrückbewegung in den Innenquerschnitt des Kupplungs-Gehäuses 2. Sie nehmen daher ohne Einfluß des Mitnehmers (für eine Ausrückbewegung) jeweils selbsttätig eine Einrückstellung ein. Dadurch ergibt sich der wesentliche Vorteil, daß der Bundnippel 3a in die Kupplungs-Gehäuseöffnung 9 eingeführt werden kann, wobei die federbeaufschlagten Spannklinken 11 seitlich zurückweichen und dann hinter dem Bund 4a des Bundnippels 3a wieder einrücken. Dadurch ist ohne manuelle Betätigung der Spannvorrichtung 7 bereits eine erste Verbindung der beiden Rohrleitungsenden bzw. der Bundnippel 3, 3a vorhanden. Insbesondere beim Anschließen von schweren Schlauchleitungen bedeutet dies eine erhebliche Erleichterung, da die Schlauchleitung mit dem Bundnippel 3a beidhändig erfaßt und ohne gleichzeitig erforderliche Bedienung des Verschlußmechanismus beim Kupplungs-Gehäuse 2 eingerastet werden kann. Somit bilden die Spannklinken 11 in dieser Stellung gleichzeitig auch Rastriegel. Nach dieser losen Verbindung erfolgt dann ein Verdrehen der Exzenterbolzen 13, durch die dann der Bund 4a gegen die Ringdichtung 6 gepreßt wird.

Die Spannklinken 11 (Fig. 3) weisen an ihren in den Innenquerschnitt des Kupplungs-Gehäuses 2 eingreifenden Abschnitten jeweils eine etwa zum offenen, bundfreien Ende 16 weisende Auflaufschräge 17 sowie jeweils etwa dem Anschlagbund 8 zugewandte Druckflächen 18 zur Beaufschlagung des Bundes 4a des einen Bundnippels 3a auf. Durch die Auflaufschrägen 17 ist das vorbeschriebene erste Einrasten ermöglicht, weil dabei die Spannklinken 11 beim Auftreffen des Bundes 4a auf die Auflaufschräge 17 entsprechend zurückweichen können. Die Schräge der Druckflächen 18 in Eingreifstellung ist relativ zur Längsachse der Kupplung 1 so gewählt, daß eine flächige Anlage an der Rückseite 19 des Bundes 4a vorhanden ist. In Fig. 3 ist der Übersicht halber der Exzenterbolzen 13 weggelassen.

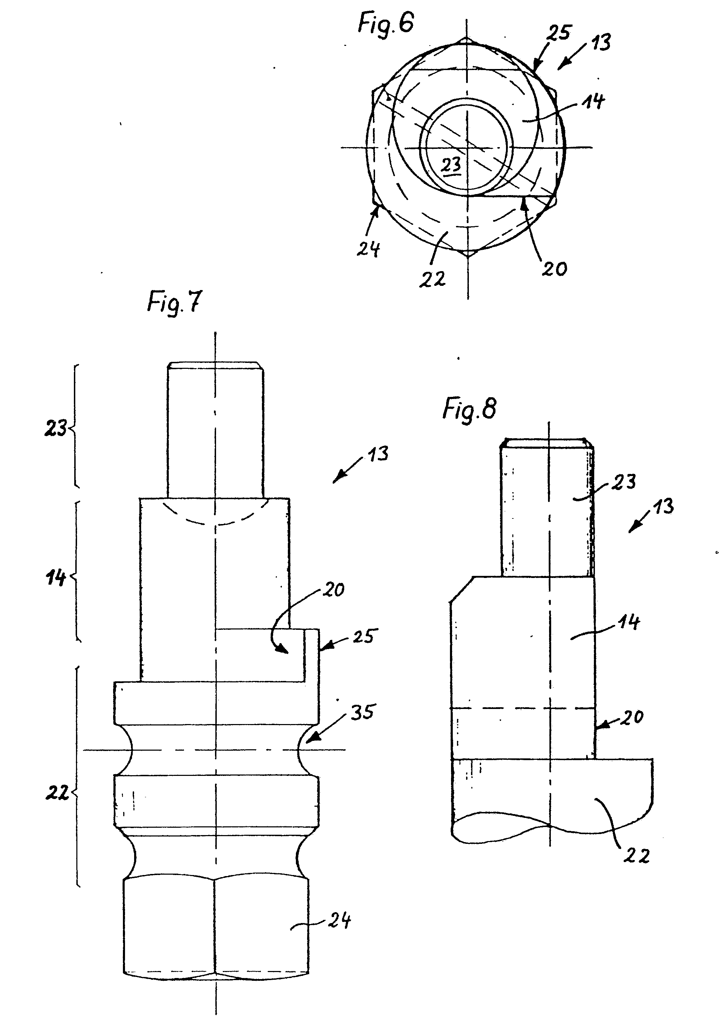

Der Mitnehmer für die in Fig. 1 und 3 gezeigte Ausrückbewegung der Spannklinken 11 ist im wesentlichen durch eine am Exzenterbolzen vorgesehene Anschlagfläche 20 gebildet (vgl. Fig. 5 bis 7), die an einen Absatz 21 (Fig. 3) der Spannklinken 11 anlegbar ist. Der Exzenterbolzen 13 (Fig. 6 bis 8) weist neben dem die Spannklinke 1 durchgreifenden exzentrischen Mittelteil (Exzenter 14) einen kopfseitigen, zentrischen Abschnitt 22 sowie am anderen Ende des Exzenters 14 einen zentrischen Lagerzapfen 23 auf. Der kopfseitige, zentrische Abschnitt 22 weist gegenüber dem Exzenter 14 einen größeren Außendurchmesser auf. An seinem äußeren Ende ist eine Angriffsstelle, im Ausführungsbeispiel ein Außensechskant 24 für ein Verdrehwerkzeug vorgesehen. Anstatt des Außensechskantes könnte auch ein Innensechskant (Fig. 1) für einen Inbusschlüssel oder ein Querschlitz für einen Schraubendreher usw. vorgesehen sein. Die Anschlagfläche 20 ist im wesentlichen durch eine Ausnehmung an dem Abschnitt 22 gebildet, wobei die Anschlagfläche 20 etwa tangential zu dem Exzenter 14 verläuft. Die Anschlagfläche 20 ist dabei an der Seite vorgesehen, an der die Außenseite des Exzenters 14 etwa den größten Abstand zur Außenseite des Abschnittes 22 aufweist (Fig. 8).

Die Rückseite des die Anschlagfläche 20 aufweisenden Mitnehmeranschlages bildet eine weitere Anschlagfläche 25 für eine Drehbegrenzung in Spannstellung, wobei diese Anschlagfläche insbesondere durch eine axiale Fortsetzung des Abschnittes 22 gebildet ist. Dieser Anschlag ist so ausgebildet, daß er vorzugsweise um 15° verdreht zum Verriegelungstotpunkt anliegt.

Als Gegenfläche für die Anschlagfläche 20 bzw. 25 sind an den Spannklinken 11 jeweils eine Ausnehmung 26 vorgesehen, die asymmetrisch zur Bohrung 15 der Spannklinke 11 angeordnet ist. Diese Ausnehmung 26 ist etwa über einen Umfangsbereich von 180° randoffen ausgebildet (Fig. 3). Dabei ist ein etwa tangential zur Bohrung 15 verlaufender Absatz 21 gebildet, der etwa parallel zu der Druckfläche 18 verläuft. Dieser Absatz 21 liegt beim Ausrücken der Spannklinken 11 an der Anschlagfläche 20 des Exzenterbolzens 13 an. Die Gegenfläche 27 für die Anschlagfläche 25 am Exzenterbolzen 13 ist durch eine etwa spiralig von der Bohrung 15 weglaufende Begrenzungswand der Ausnehmung 26 gebildet. Es ergibt sich somit für die Exzenterbolzen 13 ein relativer Verdrehwinkel zu den Spannklinken 11 von etwa 180°. In Spannstellung ergibt sich dabei am Ende dieser etwa halben Umdrehung ein fester Anschlag, während entgegengesetzt ausgehend von der Einklinkstellung bei Anlage der Anschlagfläche 20 am Absatz 21 ein Ausschwenken der Spannklinken 11 um beispielsweise 30° erfolgt.

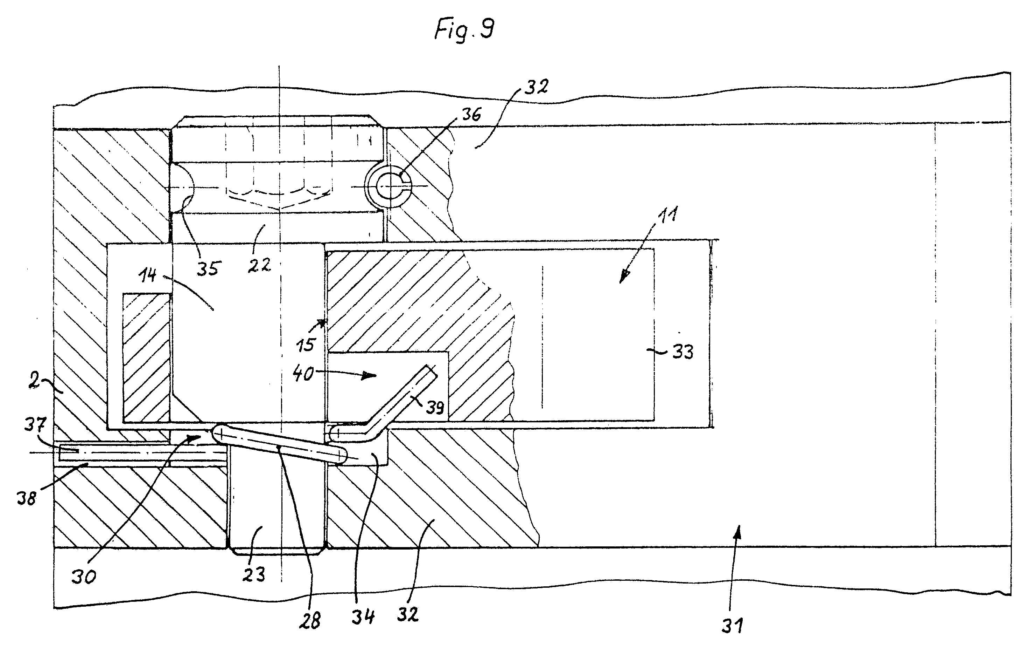

Die Federbeaufschlagung der Spannklinken 11 zum Verschwenken in ihre Einklinkstellung erfolgt im Ausführungsbeispiel mittels Schenkelfedern 28 (Fig. 5 und 9), die zur Lagerung auf den Lagerzapfen 23 des Exzenterbolzens 13 aufgesteckt sind und mit einem Ende am Kupplungs-Gehäuse und mit dem anderen Ende an der Spannklinke 11 befestigt sind. In entspannter Lage der Federn 28 befinden sich die Spannklinken 11 in der in Fig. 3 strichliniert gezeichneten Einklink- bzw. Spannlage. Zur Aufnahme der Schenkelfedern 28 ist im Anschluß an die Lagerbohrung 29 für den Zapfen 23 eine Ausnehmung 30 vorgesehen. Fig. 9 läßt erkennen, daß das eine Ende 37 der Feder 28 in eine Bohrung 38 des Gehäuses 2 und das andere Ende 39 abgewickelt ist und in einen Schlitz 40 der Spannklinke 11 eingreift. Zur Aufnahme bzw. Lagerung der Spannklinken 11 bzw. auch der Exzenterbolzen 13 u. dgl. sind seitlich an dem Kupplungs-Gehäuse 2 angeordnete Flanschtaschen 31 vorgesehen, die jeweils im wesentlichen durch zwei mit Parallelabstand zueinander angeordnete Lagerflansche 32 gebildet sind. Im Ausführungsbeispiel sind zwei diametral gegenüberliegend am Gehäuse 2 angeordnete Flanschtaschen 31 mit jeweils einer Spannklinke 11 vorgesehen. Bei extremen Belastungen bzw. Anforderung, z. B. hohen Innendrücken, stärkeren mechanischen (Biege-)Belastungen der Kupplungsstelle usw. oder aber bei größeren Rohren, könnten am Umfang des Kupplungs-Gehäuses 2 auch mehr als zwei zur Spannvorrichtung 7 gehörende Spannklinken 1 angeordnet sein. Gegebenenfalls kann auch, insbesondere bei kleineren Rohren, eine einzige bewegliche Spannklinke eventuell mit einer etwas größeren Umfangserstreckung und/oder einem starren Widerlager auf der anderen Seite, genügen.

Die Lagerflansche 32 sind so bemessen, daß die Spannklinken 11 in Betriebsstellung innerhalb von deren Umrißform liegen. Es ergibt sich unter anderem dadurch eine glatte kompakte Außenform des Kupplungs-Gehäuses 2 und außerdem ist ein unbeabsichtigtes Öffnen durch Bewegen der Spannklinken 11 von außen her praktisch nicht möglich.

Wie bereits vorerwähnt, erfolgt beim Spannen der Spannklinken 11 durch Verdrehen der Exzenterbolzen 13 eine Schiebebewegung etwa in Richtung des Pfeiles Pf 1 in Fig. 3, durch die die Bundnippel 3, 3a dicht gegen die Ringdichtung 6 angepreßt werden. Durch den Anschlag 25/27 ergibt sich für den Exzenterbolzen 13 eine Drehbegrenzung in Spannstellung, wobei diese Anschlagstellung um eine Drehung des Exzenterbolzens 13 von etwa 15° weiter als die Verriegelungs-Totpunktstellung des Exzenters 14 erreicht wird. Die Spannklinken 11 sind somit in ihrer Endlage verriegelt, so daß in Belastungsrichtung auftretende, auf die Spannklinken übertragene Haltekräfte eine verstärkte Anlage an den Anschlag ergeben würde — entgegen der Öffnungsdrehbewegung.

Zusätzlich zu dieser vorbeschriebenen Verriegelung ist noch eine weitere, formschlüssig wirkende Verriegelung der Spannklinken 11 in Spannstellung vorgesehen. Dazu weisen die Spannklinken 11 jeweils eine über die Druckfläche 18 vorstehende Sicherungsnase 33 auf, die in Spannstellung in eine gehäuseseitige Ausnehmung 34 eingreift. Die Eingriffstiefe der Sicherungsnase 33 in die Ausnehmung 34 ist dabei so bemessen, daß aus der Einklinkstellung ein ungehindertes Ausschwenken der Spannklinken 11 in Offenstellung (wie in Fig. 3 durchgehend gezeichnet) möglich ist. Beim Verdrehen des Exzenterbolzens 13, ausgehend von der Einklinkstellung der Spannklinken 11, gelangen die Sicherungsnasen 33 durch die Schiebebewegung gemäß dem Pfeil Pf 1 der Spannklinken 11 zunehmend in die Ausnehmung 34, bis sie in Spannstellung ihre Endlage, wie strichliniert in Fig. 3 eingezeichnet, einnehmen. In dieser Lage sind die Spannklinken 11 zusätzlich gegen Herausschwenken, auch mittels eines direkt an ihnen angreifenden Werkzeuges u. dgl. gesichert.

Die durch den Anschlagbund 8 des Kupplungs-Gehäuses 2 gebildete Gehäuseöffnung hat zweckmäßigerweise einen mehreckigen, hier achteckigen Querschnitt, in den ein entsprechend profilierter Abschnitt des Bundnippels 3 eingreift. Bei einem fest installierten Bundnippel 3 bzw. Rohrende kann somit das Gehäuse 2 in Winkelschritten von 45° angeordnet werden. Dadurch läßt sich in bezug auf die Bedienung der Spannvorrichtung 7 eine jeweils günstige Position einstellen, was insbesondere unter beengten Verhältnissen vorteilhaft ist.

Die Bundnippel 3, 3a können als Anschweißnippel oder Schraubnippel ausgebildet sein.

Zur Sicherung der Exzenterbolzen weisen diese noch an ihrem Abschnitt 22 eine Einkehlung 35 auf, in die ein am Gehäuse 2 befestigter Sicherungsstift 36 zum axialen Festlegen der Exzenterbolzen 13 eingreifen kann. Eine weitere, abgewandelte Ausführungsform einer axialen Ausziehsicherung für die Exzenterbolzen kann noch darin bestehen, daß bei seiner Verdreh-Angriffsstelle ein etwa scheibenförmiger, mit einer abschnittförmigen Ausnehmung versehener Kopf vorgesehen ist, der in Einklinkstellung sowie in Spannstellung in einen radialen Seitenschlitz des Gehäuses eingreift, während er in Offenstellung durch die abschnittförmige Ausnehmung außerhalb dieses Seitenschlitzes für eine Entnahme frei ist.

Da das Kupplungs-Gehäuse 2 mit dem in den Rohrleitungen geführten Medium praktisch nicht in Verbindung tritt, kann die Materialauswahl für das Gehäuse sich auf die erforderliche Festigkeit sowie auch auf günstige Herstellbarkeit beschränken. Somit kann ein Kupplungs-Gehäuse 2 bei einer bestimmten Rohr-Nennweite jeweils für die unterschiedlichsten Fördermedien bzw. auch für Bundnippel oder Rohrleitungen aus unterschiedlichstem, auf das Fördermedium angepaßtem Material universell verwendet werden. Weiterhin ist für die günstige Lagerhaltung vorteilhaft, daß die zum Einsatz kommenden Bundnippel 3, 3a auch für andere Rohrleitungsverbindungen wie z. B. mittels Losflansche oder mittels Überwurfmuttern verwendet werden können. Dabei können Bundnippel als Anschweißnippel gelagert und später je nach Einsatz gegebenenfalls mit einem Gewinde versehen werden.

Erwähnt sei noch, daß zum Öffnen der Kupplung 1 zunächst ein Exzenterbolzen über den Verriegelungstotpunkt hinaus verdreht wird, wobei sich die Spannklinke 11 mit ihrer Druckfläche 18 von der Rückseite 19 des Nippelbundes zunehmend löst, bis der Mitnehmeranschlag nach einer Verdrehung von etwa 180° zur Anlage kommt. Dabei befindet sich die Spannklinke 11 immer noch in Eingreifstellung. Auch die andere Spannklinke 11 wird auf gleiche Weise gelockert, wobei aber der Bundnippel 3a durch die dann erzielte Einklinkstellung gehalten ist. Erst nach dem weiteren Verdrehen eines der Exzenterbolzen 13 schwenkt dann die zugehörige Spannklinke 11 in Freigabestellung, so daß dann der Bundnippel 3a od. dgl. durch leichtes Verkippen bereits entnommen werden kann. Falls ein solches Verkippen nicht möglich ist, muß zum Entnehmen parallel auch die zweite Spannklinke 11 in Freigabestellung verschwenkt werden.

Erwähnt sei noch, daß das Verstellen der Spannklinken 11 in Spannstellung von der Einklink- oder Rastvorrichtung unabhängig ist, so daß auch ohne Federn 28 eine sichere Verspannfunktion möglich ist. Nach dem Herausnehmen des Bundnippels 3a in Ausschwenkstellung federn die Spannklinken wieder in Einklinkstellung zurück, so daß dann die Kupplung 1 für den nächsten Kupplungsvorgang wieder vorbereitet ist.

Das Bedienen der Kupplung 1 erfolgt insbesondere mit kleineren Hilfswerkzeugen (Inbusschlüssel od. dgl.), so daß ein unbeabsichtigtes Betätigen weitestgehend ausgeschlossen ist. Es hat sich in Versuchen herausgestellt, daß die im wesentlichen eine Schnellkupplung bildende Kupplung 1 vom Sicherheitsstandpunkt auch mit einer konventionellen Rohrverschraubung oder unter Umständen auch mit einer Flanschverbindung gleichgestellt werden kann, wobei diese Verbindungen ebenfalls nur mit Werkzeugen — allerdings bedeutend umständlicher — bedienbar sind. Trotz dieser hohen Verbindungssicherheit ist bei der erfindungsgemäßen Kupplung 1 eine schnelle Bedienung vergleichbar mit der bei bekannten Schnellkupplungen möglich.

Durch entsprechende Ausbildung der Werkzeug-Angriffsstellen an den Exzenterbolzen 13 läßt sich auch einrichten, daß die Kupplung 1 nur mit einem speziellen Schlüssel betätigt werden kann, so daß auch in dieser Hinsicht eine erhöhte Sicherheit vorhanden ist (Schlüsselsystem). Dies kann insbesondere bei der Handhabung mit gefährlichen Fördermedien u. dgl. einen zusätzlichen Sicherheitsaspekt ergeben.

**Patentansprüche**

1. Kupplung zum Verbinden der mit je einem Bund (4, 4a) versehenen Enden zweier Rohrleitungen od. dgl., welche die beiden einander zugewandten Bunde (4, 4a) übergreifende Mittel (7) zum axialen Verspannen der Rohrleitungsenden gegen eine dazwischen befindliche Dichtung (6) aufweist, dadurch gekennzeichnet, daß sie ein Kupplungs-Gehäuse (2) sowie an den Rohrenden zwei gleiche mit Nippeln (3, 3a) od. dgl. versehene, zu Bundnippeln zusammengefaßte Bunde (4, 4a) aufweist, und daß die Spannvorrichtung (7) im Kupplungs-Gehäuse (2) angeordnet ist.

2. Kupplung nach Anspruch 1, dadurch gekennzeichnet, daß das der Kupplung (1) zugehörende Kupplungs-Gehäuse (2) in Offenstellung lose auf einem Bundnippel (3) od. dgl. Rohrende angeordnet ist.

3. Kupplung insbesondere nach Anspruch 1 oder 2, dadurch gekennzeichnet, daß sie zusätzlich zu den Spannmitteln eine Rastvorrichtung zum ersten Zusammenhalten der Enden der Rohrleitungen od. dgl. aufweist.

4. Kupplung nach Anspruch 3, dadurch gekennzeichnet, daß die Spannmittel gleichzeitig Teile der Rastvorrichtung bilden.

5. Kupplung nach einem der Ansprüche 1 bis 4, dadurch gekennzeichnet, daß das Kupplungs-Gehäuse (2) einen nach innen weisenden Anschlagbund (8) für den einen Bundnippel (3) od. dgl. sowie mit Abstand dazu etwa radial ein- und ausrückbare Spannklinken (11) zum Übergreifen des anderen Bundnippels (3a) od. dgl. aufweist.

6. Kupplung insbesondere nach einem der Ansprüche 1 bis 5, dadurch gekennzeichnet, daß die Spannklinken gleichzeitig als Schwenk- und Schiebeklinken ausgebildet und jeweils mit einem Dreh- und Vorschubantrieb verbunden sind.

7. Kupplung nach Anspruch 6, dadurch gekennzeichnet, daß ein kombinierter Dreh- und Vorschubantrieb vorzugsweise ein Exzenterantrieb mit einem Mitnehmer vorgesehen ist.

8. Kupplung nach einem der Ansprüche 5 bis 7, dadurch gekennzeichnet, daß die Spannklinken (11) federbeaufschlagt sind im Sinne einer Einrückbewegung in den Innenquerschnitt des Kupplungs-Gehäuses.

9. Kupplung nach einem der Ansprüche 5 bis 8, dadurch gekennzeichnet, daß die Spannklinken (11) ausgehend von einer insbesondere federbeaufschlagten Offenstellung, rückfedernd in eine Einklinkstellung mit in den Innenquerschnitt des Kupplungs-Gehäuses (2) eingreifenden Spannklinken (11) und durch Verdrehen der Exzenterbolzen in eine Spannstellung bringbar sind.

10. Kupplung nach einem der Ansprüche 5 bis 9, dadurch gekennzeichnet, daß die Spannklinken (11) an ihren in den Innenquerschnitt des Kupplungs-Gehäuses (2) eingreifenden Abschnitten jeweils eine etwa zum offenen, bundfreien Ende des Gehäuses (2) weisende Auflaufschräge (17) sowie jeweils etwa dem Anschlagbund (8) zugewandte Druckflächen (18) aufweisen.

11. Kupplung nach einem der Ansprüche 1 bis 10, dadurch gekennzeichnet, daß der Exzenterantrieb einen Exzenterbolzen (13) aufweist, der die Spannklinke (11) in ihrem Drehpunkt durchgreift, und daß der Mitnehmer im wesentlichen durch eine am Exzenterbolzen (13) vorgesehene Anschlagfläche (20) gebildet ist, die für eine Ausrück-Drehbewegung der Spannklinke (11) an einen an dieser vorgesehenen Mitnehmer-Absatz (21) durch Verdrehen des Exzenterbolzens (13) anlegbar ist.

12. Kupplung nach Anspruch 11, dadurch gekennzeichnet, daß der Exzenterbolzen (13) einen zu den übrigen Bereichen exzentrischen Mittelteil (14) aufweist, der die Spannklinke (11) durchgreift und daß er neben diesem exzentrischen Bereich (14) einen kopfseitigen, zentrischen Abschnitt (22) mit größerem Durchmesser aufweist, an dem vorzugsweise durch eine Ausnehmung die Anschlagfläche (20) für den Mitnehmer gebildet ist.

13. Kupplung nach Anspruch 12, dadurch gekennzeichnet, daß die Anschlagfläche (20) etwa tangential zu dem exzentrischen Mittelbereich (14) verläuft und insbesondere an der Seite vorgesehen ist, an der die Außenseite des Exzentermittelteiles etwa den größten Abstand zur Außenseite des zentrischen Abschnittes (22) mit dem größeren Durchmesser aufweist.

14. Kupplung nach einem der Ansprüche 11 bis 13, dadurch gekennzeichnet, daß etwa die Rückseite des Mitnehmeranschlages eine weitere Anschlagfläche (25) für eine Drehbegrenzung bildet und insbesondere durch eine axiale Fortsetzung des Abschnittes (22) mit dem größeren Durchmesser gebildet ist.

15. Kupplung nach einem der Ansprüche 11 bis 14, dadurch gekennzeichnet, daß an der Spannklinke (11), in Funktionsstellung benachbart zu dem zentrischen Abschnitt (22) des Exzenterbolzens (13), eine Ausnehmung (26) vorgesehen ist, die asymmetrisch zur Bohrung (15) der Spannklinke (11) angeordnet ist derart, daß der mit seinen Anschlägen in diese Ausnehmung angreifende Exenterbolzen (13) um vorzugsweise etwa 180° drehbar und dann jeweils an Begrenzungswänden der Ausnehmung (26) mit seinen Anschlagflächen jeweils anliegt.

16. Kupplung nach einem der Ansprüche 6 bis 15, dadurch gekennzeichnet, daß der neben dem Mitnehmer-Anschlag vorgesehene weitere Anschlag als Drehbegrenzung in Verriegelungsstellung für den Exenterbolzen (13) vorgesehen ist, und daß dieser Anschlag um einen Winkel, vorzugsweise etwa 15° über den Verriegelungs-Totpunkt des Exenters (14) verdreht anliegt.

17. Kupplung nach einem der Ansprüche 1 bis 16, dadurch gekennzeichnet, daß zur Aufnahme bzw. Lagerung der Spannklinken (11) bzw. der Exenterbolzen (13) u. dgl. seitlich an dem Kupplungs-Gehäuse (2) angeordnete Flanschtaschen (31) vorgesehen sind, vorzugsweise zwei diametral am Gehäuse gegenüberliegende Flanschtaschen mit insbesondere jeweils zwei mit Parallelabstand zueinander angeordneten Lagerflanschen (32) od. dgl.

18. Kupplung nach Anspruch 17, dadurch gekennzeichnet, daß die Spannklinken (11) jeweils eine Sicherungsnase (33) aufweisen, die in Spannstellung in eine gehäuseseitige Ausnehmung (34) eingreifen.

19. Kupplung nach einem der Ansprüche 1 bis 18, dadurch gekennzeichnet, daß die durch den Anschlagbund (8) des Kupplungs-Gehäuses (2) gebildete Gehäuseöffnung einen mehreckigen, z. B. einen achteckigen Querschnitt hat, zur Aufnahme eines entsprechend profilierten Abschnittes des Bundnippels (3).

20. Kupplung nach einem der Ansprüche 1 bis 19, dadurch gekennzeichnet, daß die Exenterbolzen (13) außenseitig, insbesondere an ihrem Kopfende, eine Angriffsstelle zum Verdrehen in Spannstellung bzw. in Offenstellung aufweisen.

21. Kupplung nach Anspruch 20, dadurch gekennzeichnet, daß als Verdreh-Angriffsstelle an dem Exenterbolzen (13) jeweils ein Außen- oder Innenmehrkant z. B. für einen Schraubenschlüssel bzw. einen Inbusschlüssel od. dgl. vorgesehen ist.

22. Kupplung nach einem der Ansprüche 1 bis 21, dadurch gekennzeichnet, daß der Exenterbolzen (13) bei seiner Verdreh-Angriffsstelle einen etwa scheibenförmigen Kopf mit einer abschnittförmigen Abnehmung aufweist, der in Einklinkstellung sowie in Spannstellung der Spannklinken (11) in einen radialen Seitenschlitz des Gehäuses (2) eingreift.

23. Kupplung nach einem der Ansprüche 1 bis 22, dadurch gekennzeichnet, daß die Spannklinken (11) zumindest in Spannstellung innerhalb der Gehäuseumrißform und insbesondere innerhalb der Flanschtaschen (31) liegen.

24. Kupplung nach einem der Ansprüche 1 bis 23, dadurch gekennzeichnet, daß das Kupplungs-Gehäuse (2) aus anderem Material als die Bundnippel od. dgl. Rohranschlüsse bestehen.

25. Kupplung nach einem der Ansprüche 1 bis 24, dadurch gekennzeichnet, daß das Kupplungs-Gehäuse (2) etwa mittig zwischen dem Anschlagbund (8) und den Druckflächen (18) der Spannklinken (11) eine Aufnahmenut (10) für die Ringdichtung (6) aufweist.

26. Kupplung nach einem der Ansprüche 1 bis 25, dadurch gekennzeichnet, daß für die federbeaufschlagte Einrückbewegung der Spannklinken (11) in Einklinkstellung Schenkelfedern (28) od. dgl. vorgesehen sind, die in Funktionsstellung jeweils einen Exenterbolzen (13) umgreifen und mit einem Ende am Kupplungs-Gehäuse (2) und mit dem anderen Ende an einer Spannklinke (11) befestigt sind.

27. Kupplung nach einem der Ansprüche 1 bis 26, dadurch gekennzeichnet, daß die Exenterbolzen (13) neben ihrem kopfseitigen, zentrischen Abschnitt (22) sowie dem exzentrischen Mittelteil (Exzenter 14) einen auf der anderen Seite des Exzenters (14) befindlichen, zentrischen Lagerzapfen (23) aufweisen.

28. Kupplung nach Anspruch 26, dadurch gekennzeichnet, daß die Schenkelfeder (28) od. dgl. in Funktionsstellung im Bereich der Lagerzapfen (23) angeordnet sind, und daß im Bereich der Lagerflansche bei den Flanschtaschen (31) Ausdrehungen od. dgl. Ausnehmungen (34) für die Schenkelfedern (28) od. dgl. vorgesehen sind.

29. Kupplung nach einem der Ansprüche 1 bis 28, dadurch gekennzeichnet, daß die Spannvorrichtung (7) wenigstens eine, vorzugsweise zwei bewegliche Schwenk- und Schiebespannklinken (11) aufweist.

## Claims

1. A coupling to connect two pipes or the like at their ends each having a collar (4, 4a), said coupling including the means (7) engaging over the two mutually opposed collars (4, 4a) and serving for axially clamping the pipe ends against an intermediate seal (6), characterized in that said coupling comprises a coupling casing (2) as well as disposed at the pipe ends two like collars (4, 4a) having nipples (3, 3a) or the like and combined to form collar nipples, and that the clamping means (7) is disposed in the coupling casing (2).

2. The coupling as claimed in claim 1, characterized in that in the open position the coupling casing (2) belonging to the coupling (1) is disposed in a loose condition on a collar nipple (3) or the like at the pipe end.

3. The coupling as claimed in particular in claim 1 or claim 2, characterized by having, in addition to the clamping means, a click-stop device for initially holding together the ends of the pipes or the like.

4. The coupling as claimed in claim 3, characterized in that the clamping means simultaneously form part of the click-stop device.

5. The coupling as claimed in any one of claims 1 to 4, characterized in that the coupling casing (2) has an inwardly facing stop collar (8) for the one collar nipple (3) or the like as well as in spaced relationship thereto clamping latches (11) adapted to engage and release approximately radially and serving to engage over the other collar nipple (3a) or the like.

6. The coupling as claimed in particular in any one of claims 1 to 5, characterized in that the clamping latches simultaneously take the form of rocking and sliding latches and are in each case connected to a rotary and feed drive.

7. The coupling as claimed in claim 6, characterized in that provision is made for a combined rotary and feed drive preferably an eccentric drive with a cam.

8. The coupling as claimed in any one of claims 5 to 7, characterized in that the clamping latches (11) are subject to spring action for an engaging motion into the inner cross section of the coupling casing.

9. The coupling as claimed in any of claims 5 to 8, characterized in that starting from an open position, in particular one subject to spring action, the clamping latches (11) are adapted to spring back to latch with clamping latches (11) engaging into the inner cross section of the coupling casing (2) and are adapted to assume a clamping position by turning the eccentric studs.

10. The coupling as claimed in any one of claims 5 to 9, characterized in that the portions of the clamping latches (11) engaging into the inner cross section of the coupling casing (2) each have an incline (17) pointing approximately to the open, collar-less end of the casing (2) as well as bearing-surface areas (18) facing approximately the stop collar (8).

11. The coupling as claimed in any one of claims 1 to 10, characterized in that the eccentric drive has an eccentric stud (13) passing through the clamping latch (11) in its centre of rotation, and that the cam is essentially formed by a stop face (20) which is provided on the eccentric stud (13) and is adapted to be applied to a cam shoulder (21) provided on the clamping latch (11) for a releasing rotary motion of the latter by turning the eccentric stud (13).

12. The coupling as claimed in claim 11, characterized in that the eccentric stud (13) has a mid-portion (14) which is eccentric with respect to the other areas and passes through the clamping latch (11), an that adjacent to said eccentric portion (14) said stud has at the head end a centric segment (22) of larger diameter forming the stop face (20) for the cam, preferably by a recess.

13. The coupling as claimed in claim 12, characterized in that the stop face (20) extends approximately tangentially to the eccentric mid-portion (14) and in particular is provided on the side at which the outside of the eccentric mid-portion has approximately the largest distance to the outside of the centric segment (22) of larger diameter.

14. The coupling as claimed in any one of claims 11 to 13, characterized in that the rear of

the cam stop forms a further stop face (25) for rotary limitation and in particular is formed by an axial continuation of the segment (22) of larger diameter.

15. The coupling as claimed in any one of claims 11 to 14, characterized in that in the operative position, adjacent to the centric segment (22) of the eccentric stud (13), there is provided on the clamping latch (11) a recess (26) disposed asymmetrically to the bore (15) of the clamping latch (11) in such a manner that the eccentric stud (13) engaging with its stop faces into said recess is adapted to be rotated through preferably about 180° and then in each case rests with its stop faces against boundary walls of said recess (26).

16. The coupling as claimed in any one of claims 5 to 15, characterized in that the further stop provided adjacent to the cam stop is devised as a rotary limitation for the eccentric stud (13) in the locking position, and that said stop is angularly offset, preferably about 15° above the locking dead centre of the eccentric (14).

17. The coupling as claimed in any one of claims 1 to 16, characterized in that for receiving and mounting the clamping latches (11) and eccentric studs (13) and the like there are provided flange pockets (31) disposed laterally on the coupling casing (2), preferably two flange pockets diametrically opposed on the casing and each having in particular two bearing flanges (32) or the like disposed in parallel spaced relationship.

18. The coupling as claimed in claim 17, characterized in that the clamping latches (11) in each case have a retaining projection (33) which, in the clamping position, engage in a recess (34) at the side of the casing.

19. The coupling as claimed in any one of claims 1 to 18, characterized in that the casing opening formed by the stop collar (8) of the coupling casing (2) has a polygonal cross section, e.g. octagonal, for receiving a correspondingly shaped segment of the collar nipple (3).

20. The coupling as claimed in any one of claims 1 to 19, characterized in that the eccentric studs (13) have on the outside, in particular at their head end, a point of engagement for turning into the clamping position or into the open position.

21. The coupling as claimed in claim 20, characterized in that as the point for turning the eccentric stud (13), the same is externally or internally of poly-edged configuration, e.g. for a spanner or wrench or the like.

22. The coupling as claimed in any one of claims 1 to 21, characterized in that the eccentric stud (13) at its point for turning has a approximately disc-shaped head with a segment-like taper, said head in the latching position and in the clamping position of the clamping latches (11) engaging into a radial side slot of the casing (2).

23. The coupling as claimed in any one of claims 1 to 22, characterized in that at least in the clamping position the clamping latches (11) lie within the outer contour of the casing and in particular within the flange pockets (31).

24. The coupling as claimed in any one of claims 1 to 23, characterized in that the coupling casing (2) is made of different material than the collar nipples or similar pipe connections.

25. The coupling as claimed in any one of claims 1 to 24, characterized in that approximately in a central location between the stop collar (8) and the bearing-surface areas (18) of the clamping latches (11), the coupling casing (2) has a groove (10) for receiving the annular seal (6).

26. The coupling as claimed in any one of claims 1 to 25, characterized in that for moving the clamping latches (11) forward into latching position under spring action there are provided leg springs (28) or the like which, in the operative position, each embrace an eccentric stud (13) and are secured at one end to the coupling casing (2) and at the other end to a clamping latch (11).

27. The coupling as claimed in any one of claims 1 to 26, characterized in that adjacent to their centric segment (22) at the head and the eccentric mid-portion (eccentric 14), the eccentric studs (13) have a centric journal (23) located on the other side of the eccentric (14).

28. The coupling as claimed in claim 26, characterized in that in the operative position the leg springs (28) or the like are disposed in the region of the journals (23) and that in the region of the bearing flanges in the flange pockets (31) there are provided bores or like recesses (34) for the leg springs (28) or the like.

29. The coupling as claimed in any one of claims 1 to 28, characterized in that the clamping means (7) has at least one, preferably two, rocking and sliding clamping latches

**Revendications**

1. Raccord pour relier les extrémités, munies chacune d'un collet (4, 4a), de deux tuyaux ou éléments similaires, qui présente des moyens (7) s'appliquant par dessus les deux collets (4, 4a) tournés l'un vers l'autre, pour le serrage axial des extrémités de tuyau contre un joint (6) situé entre elles, caractérisé en ce qu'il présente un corps de raccord (2) ainsi que, aux extrémités de tuyau, deux collets semblables (4, 4a) munis de mamelons (3, 3a) ou parties similaires réunis en des mamelons de collet, et en ce que le dispositif de serrage (7) est disposé dans le corps de raccord (2).

2. Raccord selon la revendication 1, caractérisé en ce qu'en position ouverte, le corps de raccord (2) appartenant au raccord (1) est disposé librement sur un mamelon de collet (3) ou extrémité similaire de tuyau.

3. Raccord, en particulier selon l'un des revendications 1 et 2, caractérisé en ce qu'en plus des moyens de serrage, il présente, un dispositif d'arrêt pour maintenir initialement assemblées les extrémités des tuyaux ou éléments similaires.

4. Raccord selon la revendication 3, caractérisé en ce que les moyens de serrage forment en même temps des parties du dispositif d'arrêt.

5. Raccord selon l'une des revendications 1 à 4, caractérisé en ce que le corps de raccord (2) présente un collet de butée (8) tourné vers l'intérieur pour l'un des mamelons de collet (3) ou parties similaires, ainsi que, à distance de celui-ci, des cliquets de serrage (11) pouvant s'engager et se dégager à peu près radialement, pour s'appliquer par dessus l'autre mamelon de collet (3a) ou partie similaire.

6. Raccord, en particulier selon l'une des revendications 1 à 5, caractérisé en ce que les cliquets de serrage sont conçus en même temps sous forme de cliquets pivotants et coulissants et sont reliés chacun à un entraînement de rotation et d'avancement.

7. Raccord selon la revendication 6, caractérisé en ce qu'il est prévu un entraînement combiné de rotation et d'avancement, de préférence un entraînement à excentrique muni d'un entraîneur.

8. Raccord selon l'une des revendications 5 à 7, caractérisé en ce que les cliquets de serrage (11) sont sollicités par ressort dans le sens d'un mouvement d'engagement dans la section intérieure du corps de raccord.

9. Raccord selon l'une des revendications 5 à 8, caractérisé en ce que les cliquets de serrage (11), en partant d'une position ouverte en particulier sollicitée par ressort, peuvent être amenés avec retour élastique à une position d'engagement où les cliquets de serrage (11) s'engagent dans la section intérieure du corps de raccord (2) et, par déviation des tourillons excentriques, à une position de serrage.

10. Raccord selon l'une des revendications 5 à 9, caractérisé en ce que les cliquets de serrage (11) présentent chacun, en leurs parties qu's'engagent dans la section intérieure du corps de raccord (2), un biseau d'accès (17) tourné à peu près vers l'extrémité ouverte et sans collet du corps (2), ainsi que, chacun, des surfaces de compression (18) tournées à peu près vers le collet de butée (8).

11. Raccord selon l'une des revendications 1 à 10, caractérisé en ce que l'entraînement à excentrique présente un tourillon excentrique (13) qui traverse le cliquet de serrage (11) en son centre de rotation, et en ce que l'entraîneur est formé exentiellement par une surface de butée (20) prévue sur le tourillon excentrique (13) et que, pour un mouvement de rotation de dégagement du cliquet de serrage (11), peut s'appliquer contre un gradin d'entraînement (21) prévu sur celui-ci, par déviation du tourillon excentrique (13).

12. Raccord selon la revendication 11, caractérisé en ce que le tourillon excentrique (13) présente une partie centrale (14) excentrique par rapport aux autres régions, qui traverse le cliquet de serrage (11), et en ce qu'il présente, à côté de cette région exentrique (14), une partie centrée (22) de plus grand diamètre, située vers la tête et sur laquelle est formée, de préférence par un évidement, la surface de butée (20) destinée à l'entraîneur.

13. Raccord selon la revendication 12, caractérisé en ce que la surface de butée (20) est dirigée à peu près tangentiellement à la région excentrique (14) et est prévue en particulier du côté où le côté extérieur de la partie centrale excentrique présente à peu près la plus grande distance au côté extérieur de la partie centrée (22) de plus grand diamètre.

14. Raccord selon l'une des revendications 11 à 13, caractérisé en ce qu'à peu près le côté postérieur de la butée d'entraînement forme une surface de butée supplémentaire (25) pour une limitation de rotation, et est formé en particulier par un prolongement axial de la partie (22) de plus grand diamètre.

15. Raccord selon l'une des revendications 11 à 14, caractérisé en ce que sur le cliquet de serrage (11) est prévu un évidement (26) qui, en position de fonctionnement, est voisin de la partie centrée (22) du tourillon excentrique (13) et qui est disposé asymétriquement par rapport à la perforation (15) du cliquet de serrage (11) de telle sorte que le tourillon exentrique (13) s'appliquant par ses butées dans cet évidement peut tourner, de préférence, d'environ 180° et s'applique alors chaque fois, par ses surface de butée, contre des parois de limitation de l'évidement (26).

16. Raccord selon l'une des revendications 6 à 15, caractérisé en ce que la butée supplémentaire prévue à côté de la butée d'entraînement est prévue comme limitation de rotation du tourillon excentrique (13) en position de verrouillage, et en ce que cette butée s'applique en position déviée d'une angle, de préférence d'environ 15°, au-delà du point mort de verrouillage de l'excentrique (14).

17. Raccord selon l'une des revendications 1 à 16, caractérisé en ce que pour le logement ou l'appui des cliquets de serrage (11) ou des tourillons excentriques (13) et organes similaires sont prévus des logements à rebord (31) disposés latéralement sur le corps de raccord (2), de préférence deux logements à rebord diamétralement opposés sur le corps, présentant en particulier chacun deux rebords de palier (32) ou éléments similaires disposés avec espacement parallèlement entre eux.

18. Raccord selon la revendication 17, caractérisé en ce que les cliquets de serrage (11) présentent chacun un bec d'assujetissement (33) qui s'engage, en position de serrage, dans un évidement (34) du corps.

19. Raccord selon l'une des revendications 1 à 18, caractérisé en ce que l'ouverture de corps formée par le collet de butée (8) du corps de raccord (2) présente une section polygonale, par exemple octogonale, pour loger une partie, profilée de façon correspondante, du mamelon de collet (3).

20. Raccord selon l'une des revendications 1 à 19, caractérisé en ce que les tourillons excentriques (13) présentent extérieurement, en particulier à leur extrémité de tête, un endroit d'application pour les faire dévier à la position de serrage ou à la position ouverte.

21. Raccord selon la revendication 20, caractérisé en ce que comme endroit d'application en vue de la déviation, est prévue, sur chacun des tourillons excentriques (13), une partie polygonale extérieure ou intérieure, par exemple pour une clé à écrous, une clé à douille, ou similaire.

22. Raccord selon l'une des revendications 1 à 21, caractérisé en ce que le tourillon excentrique (13), à son endroit d'application en vue de la déviation, présente une tête à peu près en forme de disque muni d'une réduction en forme de segment et qui, dans la position d'engagement ainsi que dans la position de serrage des cliquets de serrage (11), s'engage dans une fente latérale radiale du corps (2).

23. Raccord selon l'une des revendications 1 à 22, caractérisé en ce que les cliquets de serrage (11), au moins en position de serrage, sont situés à l'intérieur du contour du corps et en particulier à l'intérieur des logements, en particulier à l'intérieur des logements à rebord (31).

24. Raccord selon l'une des revendications 1 à 23, caractérisé en ce que le corps de raccord (2) est formé d'une autre matière que les mamelons de collet ou raccordements similaires de tubes.

25. Raccord selon l'une des revendications 1 à 24, caractérisé en ce que le corps de raccord (2) présente, à peu près à mi-chemin entre le collet de butée (8) et les surfaces de compression (18) des cliquets de serrage (11), une gorge de logement (10) pour le joint annulaire (6).

26. Raccord selon l'une des revendications 1 à 25, caractérisé en ce que pour le mouvement d'engagement des cliquets de serrage (11) en position d'encliquetage sous une action de ressort, sont prévus des ressorts à branches (28) ou similaires qui, en position de fonctionnement, enserrent chacun un tourillon excentrique (13) et qui sont fixés par une extrémité au corps de raccord (2) et par l'autre extrémité à un cliquet de serrage (11).

27. Raccord selon l'une des revendications 1 à 26, caractérisé en ce que les tourillons excentriques (13) présentent, à côté de leur partie centrée (22) située vers la tête ainsi que de la partie centrale excentrique (excentrique 14), un tourillon centré (23) situé de l'autre côté de l'excentrique (14).

28. Raccord selon la revendication 26, caractérisé en ce que les ressorts à branches ou similaires sont disposés, en position de fonctionnement, dans la région des tourillons (23), et en ce que dans la région des rebords de palier sont prévus, près des logements à rebord (31), des évidements tournés ou similaires (34) destinés aux ressorts à branches (28), ou similaires.

29. Raccord selon l'une des revendications 1 à 28, caractérisé en ce que le dispositif de serrage (7) présente au moins un, de préférence deux cliquets de serrage mobiles (11) pivotants et coulissants.

Fig.1

Fig.2

*Fig. 3*

Fig. 4

Fig. 5

Fig.6

25
13
14
23
24
22
20

Fig.7

23
13
14
20
25
35
22
24

Fig.8

23
13
25
14
20
22

17

Fig. 9